# FASCICULE DE BREVET EUROPEEN

(11) **EP 2 199 069 B1**
(45) Date de publication et mention de la délivrance du brevet: **11.06.2014**
(21) Numéro de dépôt: 08172273.8
(22) Date de dépôt: 19.12.2008
(51) Int. Cl.: B29C 70/32, B29C 33/52, B29C 53/56, B29C 53/58, B29C 53/80

(54) **Fabrication de pièces composites complexes**
Herstellung von komplexen Verbundwerkstücken
Production of complex composite pieces

(43) Date de publication de la demande: 23.06.2010
(73) Titulaire: Techspace Aero S.A., 4041 Milmort (BE)
(72) Inventeur: Laurent, Philippe, 4620 Fleron (BE); Duchaine, Georges, 4608 Warsage (BE)
(74) Mandataire: Pronovem

(56) Documents cités:
- EP-A- 1 938 955
- US-A- 3 367 817
- US-A- 5 236 018
- ANONYMOUS: "Flanged composite tube" RESEARCH DISCLOSURE, MASON PUBLICATIONS, HAMPSHIRE, GB, vol. 302, no. 21, 1 juin 1989 (1989-06-01), XP007113802 ISSN: 0374-4353

## Description

### Objet de l'invention

La présente invention se rapporte à un procédé automatique de fabrication de pièce composite de révolution et de section droite complexe.

Elle se rapporte plus particulièrement à la fabrication de pièces destinées au domaine aéronautique.

### Etat de la technique

Dans le domaine aéronautique, une innovation technologique industrielle marquante est sans doute l'introduction des matériaux composites, car ceux-ci permettent de réduire considérablement la masse des pièces utilisées et d'obtenir une meilleure tenue en fatigue.

On connaît différents procédés pour la fabrication de pièces composites de révolution et de géométrie simple.

On peut citer, entre autres, le moulage par centrifugation qui consiste à déposer de la résine et des fils coupés à l'intérieur d'un moule cylindrique en rotation. L'inconvénient de ce procédé est qu'il permet seulement la réalisation de formes cylindriques.

On peut également citer l'enroulement filamentaire qui est un procédé de fabrication par dépôt en continu de fils ou de rovings (ensemble de fils), préalablement imprégnés d'une résine, sur un mandrin ayant un mouvement de rotation. L'inconvénient de ce procédé est qu'il permet seulement la réalisation de pièces de révolution avec des géométries simples.

On connaît ainsi du brevet US 5,236,018 un procédé pour fabriquer des tubes creux ou des axes en matériau plastique renforcé par des fibres, utilisés plus particulièrement comme tubes de forage ou destinés à transmettre un couple dans un véhicule. Le tube en matériau composite comporte à ses extrémités des embouts métalliques avec un pas de vis permettant de raccorder les tubes entre eux. Le procédé consiste à enrouler plusieurs couches de fibres préimprégnées sur un mandrin, à placer les embouts métalliques aux extrémités des couches déposées et ensuite à enrouler plusieurs couches de fibres préimprégnées sur les couches précédemment enroulées et sur les embouts. Après polymérisation des couches, le mandrin est retiré.

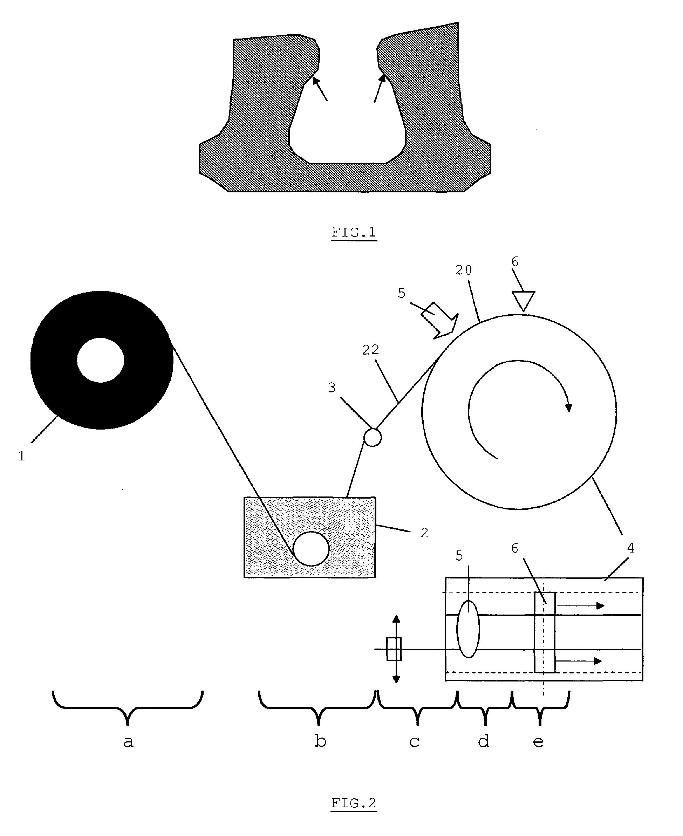

Dans le domaine aéronautique, de nombreuses pièces de révolution présentent des sections droites complexes. A titre d'exemple, la figure 1 montre une partie d'un tambour d'un compresseur basse pression d'un moteur d'avion ; cette pièce présente une section variable (suivant le rayon) ainsi que plusieurs zones en surplomb (repérées par des flèches).

Il existe un grand intérêt pour la fabrication de telles pièces en matériau composite vu le gain de masse significatif qui en résulterait.

La demande de brevet EP 1 938 955 Al présente un dispositif pour la fabrication de pièces de révolution de section droite complexe en matériau composite. Dans le dispositif divulgué, un tissu est enroulé autour d'un mandrin ayant la géométrie de la pièce à fabriquer. Un tel dispositif a pour inconvénient de nécessiter un mandrin par géométrie de pièces à réaliser et de ne pas permettre la réalisation de pièces avec des zones en surplomb.

Le brevet US 5,176,864 A présente un procédé à cire perdue; le mandrin en cire servant de support est fondu après la fabrication de la pièce. Ce procédé présente les mêmes inconvénients que ceux décrits ci-dessus.

### Buts de l'invention

La présente invention vise à fournir un procédé automatique pour la réalisation de pièces composites de révolution de section droite complexe.

La présente invention vise plus particulièrement à fournir un procédé permettant de réaliser des pièces avec des géométries variables à partir d'un même outillage.

La présente invention permettra ainsi la réalisation de pièces avec une réduction de masse significative.

### Principaux éléments caractéristiques de l'invention

La présente invention se rapporte à un procédé automatique de fabrication couche par couche d'une pièce composite de révolution et de section droite complexe comprenant les étapes suivantes pour la fabrication de chacune des couches:
a) On déroule de manière continue une bobine ou un rouleau comportant un renfort (1,11);
b) Ledit renfort (1,11) est préimprégné d'une résine ou on imprègne le renfort d'une résine liquide par passage dans un bain (2);
c) On enroule le renfort imprégné ou préimprégné (22) sur un mandrin (4) cylindrique en rotation;
d) On polymérise complètement ou partiellement le renfort imprégné ou préimprégné (22) pour l'obtention d'un matériau composite (20);
e) On dépose un support (9,21) de part et d'autre du matériau composite (20) constituant la pièce en cours de fabrication de manière à combler des vides entourant ladite pièce et ainsi maintenir la pièce en cours de fabrication;
après la réalisation de la pièce composite couche par couche, le support (9,21) est séparé de ladite pièce et ladite pièce est extraite de son mandrin (4).

Des modes particuliers de l'inventions sont décrits dans les revendications dépendantes.

### Brève description des figures

La figure 1, déjà mentionnée, représente une coupe partielle d'un tambour d'un compresseur basse pression.
La figure 2 représente schématiquement les différentes étapes du procédé de renfort (par) fil selon l'invention.
Les figures 3A à 3G donnent une description détaillée des différentes étapes de réalisation d'une pièce couche par couche selon l'invention.
La figure 4 représente schématiquement les étapes du procédé de renfort (par) tissu ou tresse selon l'invention.
La figure 5 représente une section droite d'une pièce de révolution obtenue selon l'invention avec les bandes de tissu (ou de tresse) de renfort illustrées schématiquement.
La figure 6 représente une vue de profil du mandrin sur lequel s'enroulent les bandes de tissu ou de tresse.

### Légende

1) Bobine de fils ou rovings
2) Bain de résine liquide
3) Poulie
4) Mandrin
5) Source UV ou IR
6) Tête d'injection du matériau support
7) Section droite d'une pièce de révolution
8) Section droite d'un fil
9) Matériau support
10) Section droite d'un autre fil
11) Rouleau de tissu
12) Zone de travail
13) Couche n°i
14) Couche n°j
15) Bande 'renfort'
16) Bande 'chute'
17) Bac de matériau support
18) Rouleau de calibrage
19) Première racle
20) Composite
21) Support (renfort + matériau support)
22) Renfort imprégné de résine
23) Seconde racle

### Description détaillée de l'invention

La présente invention a trait à un procédé de fabrication de pièces composites de révolution de section droite complexe.

Ce nouveau procédé doit permettre la réalisation de pièces fonctionnelles présentant des caractéristiques mécaniques et thermiques suffisantes pour prendre directement leur place dans un ensemble tel que par exemple un compresseur basse pression d'un moteur d'avion. Plus particulièrement, un tel procédé peut être utilisé pour la réalisation de pièces complexes telles que tambour, virole intérieure, virole extérieure, ...

Le procédé selon l'invention est basé sur une combinaison inventive de trois techniques :
- l'enroulement filamentaire décrit précédemment, couramment utilisé comme procédé de fabrication de pièces composites de révolution et de géométrie simple,
- le principe de construction couche par couche réalisé de façon électronique à partir d'un fichier de DAO (Dessin Assisté par Ordinateur) de la pièce. Le programme tranche virtuellement la pièce et envoie les données binaires à la machine. Ce principe est notamment mis à profit dans les techniques dites de prototypage rapide.
- la pose d'un matériau support lors de la fabrication. Ce matériau ne sert qu'à la fabrication et doit être séparé de la pièce, une fois celle-ci finie. Le rôle du matériau support est de maintenir en place la pièce en cours de fabrication. Dans le cas d'une pièce avec des zones en surplomb telle que celle de la figure 1, il est impératif que les couches nouvelles soient déposées sur un matériau support, et non dans le vide, afin d'éviter tout fluage. Les côtés de la pièce seront également pris en sandwich par le matériau support. Le matériau support doit donc présenter une rigidité suffisante et permettre une extraction aisée de la pièce composite sans en altérer ses propriétés.

Plusieurs matériaux peuvent convenir :
- les matériaux à bas point de fusion qui doivent fondre à une température suffisamment basse pour éviter de dégrader le matériau composite. On peut citer la cire, par exemple.
- les matériaux solubles dans l'eau ou tout autre solvant, comme par exemple le plâtre ou l'Aquacore^{™} (matériau céramique).
- les matériaux qui deviennent pulvérulents sous une certaine température, comme l'étain pur. Ce dernier a une température de fusion de 232°C et devient un matériau pulvérulent en-dessous de -50°C, ce qui correspond aux limites d'utilisation demandées au matériau composite et donc ne doit pas poser de problème si on refroidit la pièce à une telle température de manière à éliminer le matériau support.
- les matériaux à base d'amidon.
- le sel ou le sable qui une fois solidifiés sont cassés ou dissous dans l'eau.

Les zones de vide de la pièce à réaliser seront comblées par ce matériau support. Une alternative est de combler ces vides par un système ou support comprenant le renfort et le matériau support.

Idéalement, la pièce réalisée par le procédé selon l'invention doit satisfaire aux exigences dimensionnelles en plus de présenter les caractéristiques mécaniques et physiques requises pour l'application. Il est probable cependant que, comme dans tout procédé de fabrication de pièces composites, les tolérances dimensionnelles serrées ne soit pas réalisables dans une première étape. Dans ce cas, deux solutions sont envisageables.

La première consiste à réaliser une préforme de dimension légèrement supérieure à la pièce finie. Dans ce cas, l'ajustement des dimensions se fait par enlèvement de matière par des procédés conventionnels de type tournage, etc.

La seconde solution consiste à réaliser une préforme de dimension légèrement inférieure à la pièce finie. Dans ce cas, la préforme peut être ensuite placée entre deux moules, usinés précisément aux dimensions de la pièce, pour subir une imprégnation.

Même si cette seconde solution doit présenter une masse totale de fibre légèrement inférieure à la première solution, elle doit être préférée car l'usinage fragilise la pièce (amorce de délaminage, rupture de fibre, écaillage du gel-coat, etc.).

Le matériau composite obtenu avec le procédé selon l'invention est constitué d'une matrice en résine et d'un renfort.

Le choix de la matrice et du renfort dépendra des propriétés requises (résistance à la rupture en traction, module de Young, tenue en température, etc.). A titre d'exemple, la matrice peut être une résine époxyde ou une résine phénolique et le renfort peut être en carbone, Kevlar^{®} (aramide) ou verre. La résine sera catalysée à l'aide de thermoamorceurs et éventuellement photoamorceurs.

Le procédé décrit ci-dessous est un procédé dit à fibres longues offrant de meilleures propriétés mécaniques (module d'élasticité, résistance à la traction, ténacité, etc.) que les procédés dits à fibres courtes, et où le renfort peut être constitué d'un fil (ou roving), d'un tissu ou d'une tresse.

Selon une première forme d'exécution de l'invention, le procédé sera décrit ci-après pour un renfort de type fil. Ensuite, on décrira une variante de ce procédé pour un renfort de type tissu ou tresse.

Le procédé dit « renfort fil » (PRF) s'inspire de la méthode de l'enroulement filamentaire.

Le matériau composite est formé d'un fil ou roving imprégné de résine enroulé de façon continue autour d'un mandrin. Le matériau support est également déposé de façon continue en cours de fabrication.

La figure 2 présente schématiquement les cinq étapes du procédé renfort fil selon l'invention.

L'étape a) concerne le déroulement du renfort. Un rouleau 1 de renfort constitué de fil ou roving est déroulé de façon continue. La vitesse de déroulement est fonction de la vitesse de fabrication. Une alternative est l'utilisation directe de fils préimprégnés auquel cas l'étape b) qui est décrite ci-dessous n'a plus de raison d'être. Par souci de clarté, le renfort sera considéré comme étant formé par un seul fil de diamètre D.

L'étape b) concerne l'imprégnation du fil (ou roving). Ce dernier va constituer le renfort de la pièce composite. Il va donc être imprégné dans un bain de résine liquide et catalysée 2 (voie humide). Comme mentionné précédemment, cette étape n'existe pas dans le cas de l'utilisation de fils préimprégnés, encore appelés prépregs (voie sèche).

L'étape c) concerne l'enroulement du fil sur le mandrin. Le fil, guidé par une poulie 3 dont le déplacement axial est contrôlé précisément, s'enroule sur un mandrin 4. Idéalement, le mandrin est réalisé en acier inoxydable. Il peut être ciré pour faciliter le démoulage de la pièce finie. La pièce finie sera formée de plusieurs couches d'épaisseur égale au diamètre D du fil (en négligeant l'épaisseur du mince film de résine). Chaque couche sera formée de plusieurs spires jointives dans l'hypothèse d'un enroulement à ∼90° par rapport à l'axe du mandrin. Pour ce faire, la poulie de guidage décrit un mouvement dans le sens axial d'une quantité D à chaque tour de mandrin.

L'étape d) concerne la polymérisation de la résine. Soit la polymérisation au cours de la fabrication suffit à atteindre un degré de polymérisation maximum, soit on atteint un degré de polymérisation partiel. Dans ce dernier cas, la pièce finie devra subir un cycle de post-polymérisation. Il est évident que la zone cylindrique comprise entre le dépôt du matériau support et le dépôt du fil imprégné de résine - à savoir la partie du mandrin non utilisée jusqu'à présent - peut être mise à profit pour continuer la polymérisation du matériau composite et/ou le durcissement du matériau support (ex : séchage du plâtre). La réticulation de la résine peut être amorcée par un rayonnement UV ou IR 5. L'avantage du rayonnement UV est qu'il ne risque pas de fondre le matériau support si celui-ci est de type fusible. Dans le cas présent où le renfort est simplement formé par un fil, la lumière UV va diffuser et se diffracter de sorte que l'accrochage du fil à la couche précédente sera probablement suffisant. Pour le procédé PRF, la source UV semble donc préférable à la source IR. Une post-cuisson est toujours envisageable afin d'achever la polymérisation de la matrice pour les parties de résines moins bien exposées au rayonnement UV.

L'étape e) concerne le dépôt du matériau support. Le matériau doit se présenter sous la forme d'un liquide plus ou moins visqueux, afin de permettre son dépôt. Il importe que l'épaisseur du matériau support soit égale à l'épaisseur de la couche de matériau composite elle-même égale à *D*. Il existe des techniques de dépôts de cire très précises et utilisées notamment dans des techniques de prototypage rapide. Dans ce cas, la cire est déposée en fines gouttelettes par une tête 6 formée d'une centaine de petites buses d'injection côte à côte. La figure 2 montre dans sa partie inférieure droite une vue de dessus du mandrin où on voit la configuration de la source UV ou IR 5 et de la tête d'injection 6 sur le mandrin 4. La largeur de cette tête (∼200 mm) doit être égale à la largeur de la zone de travail. Sinon, il suffit d'utiliser plusieurs têtes.

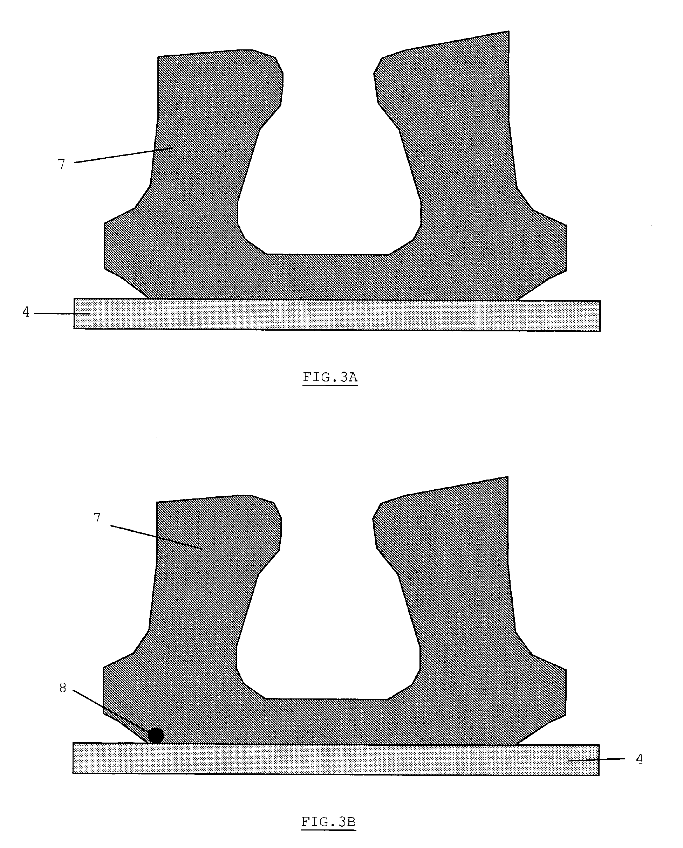

Le procédé décrit ci-dessus sera plus clair à la lumière des figures 3A à 3G décrivant respectivement les étapes successives de la fabrication d'une pièce complexe à symétrie de révolution. On se limitera à titre d'exemple aux cinq premières couches, avec un diamètre de fil choisi volontairement gros pour faciliter l'explication.

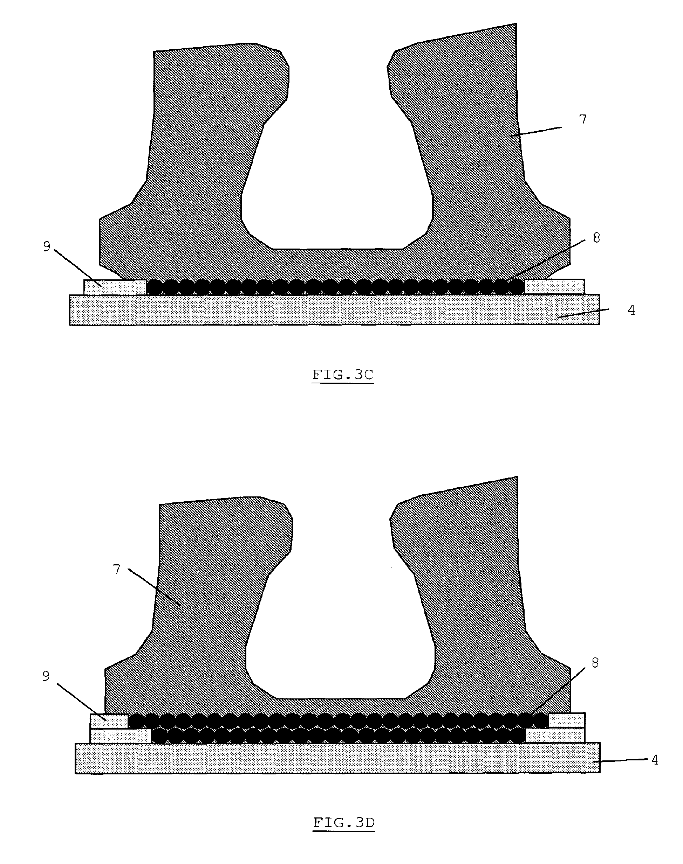

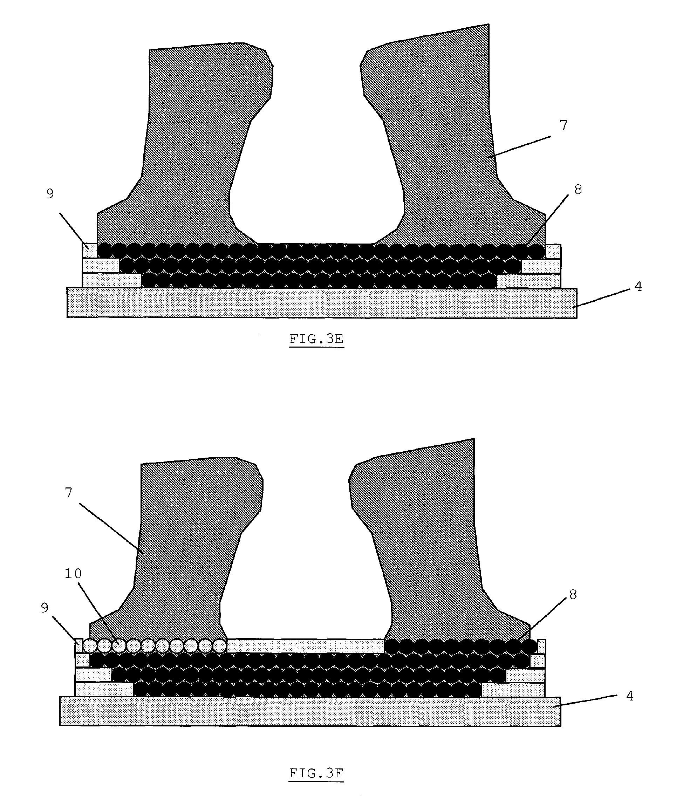

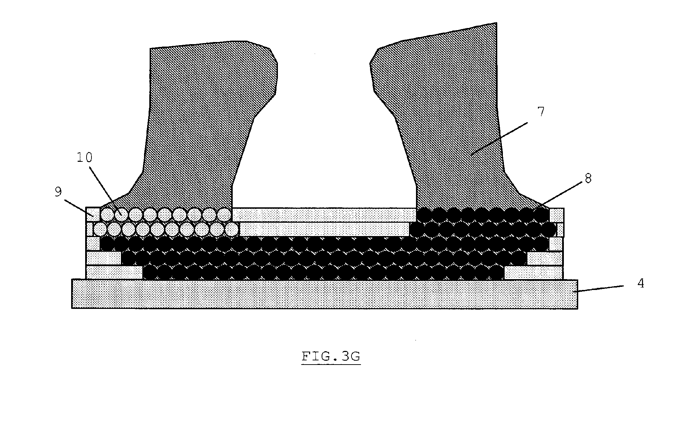

La section droite de la pièce 7 à réaliser est montrée sur la figure 3A. L'enroulement de la première spire commence par la partie à l'extrême gauche de la pièce. Le rond noir 8 représente la section droite du fil (figure 3B). Pour réaliser la première couche, la poulie de guidage se déplace de gauche à droite de façon à former des spires jointives. Simultanément à la réalisation de la première couche, le dépôt de matériau support 9, à savoir la cire, se fait de part et d'autre de la pièce (figure 3C). La seconde couche est réalisée de façon similaire à la première couche avec un déplacement de la poulie de droite à gauche (figure 3D). La troisième couche est réalisée de façon identique à la première couche avec un déplacement de la poulie de gauche à droite (figure 3E). La quatrième couche est plus complexe à réaliser car elle nécessite la réalisation simultanée de deux parties distinctes en matériau composite (figure 3F). Un fil 10 issu d'une seconde bobine doit alors être enroulé pour réaliser la partie gauche de la pièce. On notera qu'à partir de cette couche, le matériau support (cire) est également déposé entre ces deux parties de matériau composite. La cinquième couche et les couches suivantes sont fabriquées de façon similaire à la quatrième (figure 3G).

Une variante du procédé décrit ci-dessus est d'utiliser comme renfort un tissu 2D ou une tresse plate plutôt qu'un fil. Le renfort utilisé dans cette variante du procédé peut par exemple être un tissu avec des fibres de carbone orientées à 0 et 90° (tissu 0/90°) ou une tresse plate bi-axiale avec un angle de 60° entre les fibres de carbone ou encore une tresse plate tri-axiale (tresse 0/±60°, quasi-isotrope), cette dernière permettant d'obtenir de meilleures valeurs de résistance à l'impact et des propriétés mécaniques quasi-identiques dans toutes les directions du plan de la tresse plate. Le renfort peut également être constitué d'une alternance de tissu et de tresse; cette alternance permettant d'améliorer les propriétés mécaniques globales. Tout autre renfort, tel que par exemple un renfort 3D (stitching, Z-pinning, etc.), peut également, selon l'invention, être appliqué pour augmenter les propriétés interlaminaires de la pièce composite.

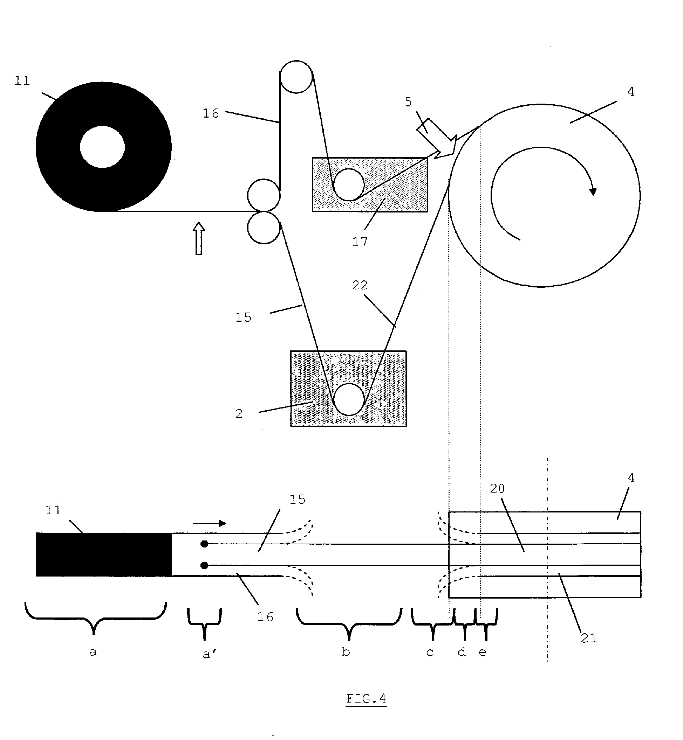

L'utilisation d'un tissu (ou une tresse) à la place d'un fil nécessite de modifier certaines étapes du procédé PRF. Le procédé dit « renfort tissu » (ou tresse), encore appelé PRT, comporte six étapes consécutives comme illustré à la figure 4. Par la suite, on décrira le procédé pour un renfort tissu mais cela s'applique bien entendu également à un renfort tresse.

L'étape a) concerne le déroulement du renfort de manière semblable au procédé PRF. Un rouleau de renfort constitué de tissu sec 11 est déroulé de façon continue. La vitesse de déroulement est fonction de la vitesse de fabrication. Une alternative est l'utilisation directe de tissus préimprégnés, auquel cas l'étape b) décrite ci-dessous n'a plus de raison d'être.

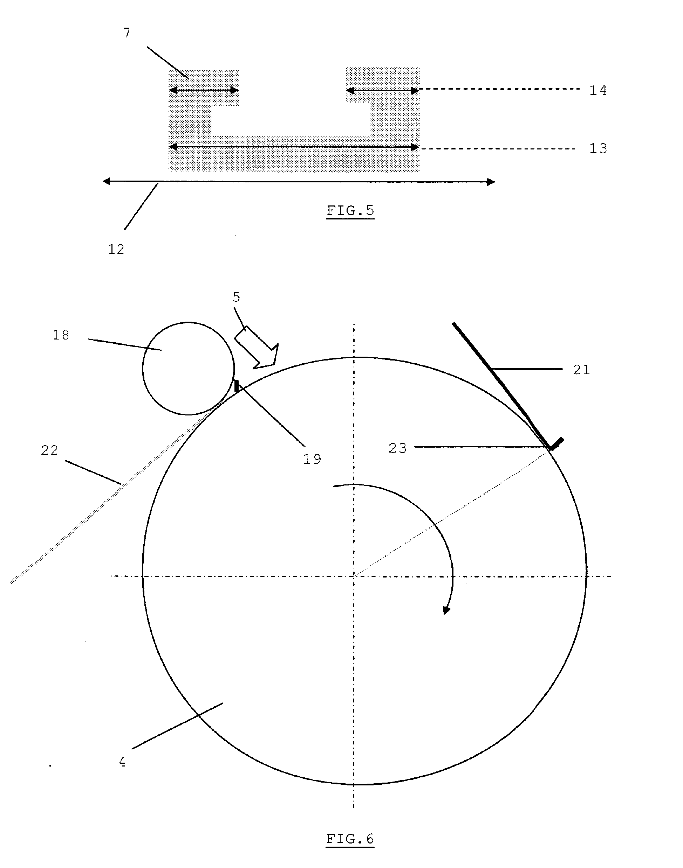

Le procédé PRT nécessite une étape supplémentaire, l'étape a'), de découpe de la bande de tissu à la largeur désirée (repérée par une flèche verticale à la figure 4). En fonction de la couche en cours de réalisation et du fichier de DAO de la pièce, la machine calcule la largeur de la (des) bande(s) de tissu à déposer comme illustré à la figure 5. La zone de travail 12 est plus large que la pièce de façon à ce que le support maintienne les parois extérieures de la pièce lors de la fabrication.

La découpe peut être parallèle ou perpendiculaire à la direction de défilement des bandes selon la géométrie de la pièce à réaliser.

Pour une découpe parallèle au sens de défilement, la découpe du tissu peut se faire de façon automatique par laser, par jet d'eau ou de façon mécanique. Des techniques de découpe de prépregs par machine à commandes numériques donnent déjà satisfaction. La largeur totale de la bande de tissu égale la largeur de la zone de travail comme montré à la figure 5. Il importe que la vitesse de découpe soit nettement supérieure à la vitesse de défilement du tissu. Réaliser deux découpes parallèles au sens du défilement du tissu est alors possible à l'aide d'un seul système de découpe. La précision actuelle dans le positionnement du système de découpe choisi doit permettre la réalisation séquentielle d'une seule découpe (laser, découpe mécanique, etc.).

Dans l'exemple illustré à la figure 5, une seule et large bande de tissu est nécessaire pour réaliser la couche n°i référenciée 13. Pour réaliser la couche n°j référenciée 14, quatre découpes parallèles au sens d'avancement du tissu sont nécessaires et donnent deux bandes de tissu renfort, appelées bandes 'renfort' et trois bandes de chute de tissu, appelées bandes 'chute'. On verra plus loin que les bandes 'renfort' 15 vont vers un bac de résine 2 alors que les bandes 'chute' 16 sont acheminées vers un autre bac 17 (voir figure 4).

L'outil de découpe, par ex. un spot laser, peut également se déplacer perpendiculairement à la direction de défilement. Prenons l'exemple d'une virole dans laquelle il existe une série d'ajours orientés de façon plus ou moins radiale. La découpe de ce type de forme ne pose aucun problème pour un système de découpe à commandes numériques. Cependant, il faudra tenir compte de la vitesse de défilement du tissu c.à.d. du déplacement relatif du tissu par rapport à la machine de découpe. Encore une fois, dans l'hypothèse d'une vitesse de coupe largement supérieure à la vitesse de défilement, cela ne devrait pas poser de problèmes.

Notons que dans le cas d'un renfort alternant tissu et tresse, il est nécessaire de disposer de deux systèmes de découpe indépendants pour chacun des types de renfort.

L'étape b) concerne l'imprégnation du renfort comme pour le procédé PRF. La bande 'renfort' 15 va constituer le renfort de la pièce composite comme son nom l'indique. Il va donc être imprégné dans un bain de résine liquide et catalysée 2 (voie humide). Cette étape n'existe pas dans le cas de l'utilisation de prépregs (voie sèche) ou dans le cas de tissu sec associé à un liant ('binder').

Les bandes 'chute' 16 peuvent être utilisées comme support et, dans ce cas, être dirigées vers un bac 17 où elles sont imprégnées de matériau support comme par exemple de la cire chaude ou du plâtre humide ou encore être simplement imprégnées d'un agent démoulant. Cette dernière solution doit probablement être évitée car l'agent démoulant présente une viscosité très faible et, en conséquence, l'épaisseur du support risque d'être plus faible que celle du matériau composite ; or, il importe que l'épaisseur du matériau composite soit égale à l'épaisseur du support à tout moment.

L'étape c) est l'étape d'enroulement de la bande 'renfort' imprégnée de résine 22 sur le mandrin 4. Dans le cas de découpes perpendiculaires à la direction de défilement (ajours), il importe que les ouvertures réalisées dans deux couches successives se juxtaposent parfaitement. En théorie la commande du système de découpe prend en compte une augmentation du rayon de la pièce en cours de fabrication. Cependant en pratique, bien que l'épaisseur des couches soit précisément calibrée, il est possible qu'une légère dérive apparaisse. Afin d'éviter tout risque de ce type, on peut conseiller l'utilisation d'un système de régulation de la tension dans la bande de façon à corriger cette éventuelle dérive et réaliser par ce fait la parfaite juxtaposition des différentes couches. La régulation de la tension peut être gérée très simplement par un galet tendeur et un actionneur. Le contrôle du placement des couches peut se faire en continu de façon optique par caméra et traitement d'image. Il existe de tels systèmes utilisés pour suivre les micro-déplacements axiaux et latéraux de certains points d'un coupon soumis à un essai de traction.

L'étape d) concerne la polymérisation de la résine. Avant la polymérisation à proprement parler, la couche déposée est calibrée. L'épaisseur du tissu limite l'épaisseur minimale de la couche réalisable et conditionne donc la précision radiale de la pièce. Cependant, l'épaisseur d'un tissu (∼125 µm) est généralement largement inférieure à l'épaisseur totale de la pièce. De façon à s'assurer de la précision de l'épaisseur de chaque couche, il est possible de déplacer radialement un rouleau, qu'on appellera rouleau compresseur ou rouleau de calibrage. Le déplacement radial *d* est synchronisé avec l'axe du mandrin tel que *d* égale l'épaisseur de la couche pour chaque tour de mandrin (formule de la spirale). L'utilisation d'un rouleau permet non seulement de contrôler les épaisseurs des couches déposées mais également d'augmenter le volume de fibre V_{f} par compression. Il serait ainsi possible d'atteindre des taux de fibres de l'ordre de 60% ou plus.

De préférence, un système de racle permet d'assurer un bon état de surface après le passage du rouleau. Dans ce cas, la racle se déplace radialement de façon solidaire avec le rouleau de calibrage. La configuration du rouleau de calibrage 18 et d'une première racle 19 autour du mandrin 4 est présentée à la figure 6. L'enroulement du renfort imprégné 22 se fait en premier lieu, suivi d'une compression pour assurer un taux de fibre Vf élevé. La première racle 19 est placée avant la source de rayonnement IR ou UV 5 pour garantir un bon état de surface.

La réticulation de la résine peut être amorcée par un rayonnement UV ou IR 5. L'avantage du rayonnement UV est qu'il ne risque pas de fondre le matériau support si celui-ci est de type fusible. L'inconvénient est que les UV ne traversent pas le tissu opaque et la polymérisation de la couche de résine déposée sur la partie inférieure du tissu sera moindre. Par opposition, l'infrarouge diffuse dans la matière, le transfert de chaleur étant effectué par conduction, et assure une polymérisation de la résine entre deux plis. Dans le cas d'un matériau support fusible, il peut être utile de diriger le rayonnement IR sur le renfort imprégné uniquement, par exemple par une rangée de LEDs IR. Il est possible également de choisir une longueur d'onde et une intensité du rayonnement inoffensive pour le matériau support si ce dernier est fusible, par exemple dans le cas de la cire. Par contre, l'utilisation de l'IR comme source est non seulement inoffensive dans le cas d'un matériau soluble tel que le plâtre, mais en plus elle va permettre d'accélérer le séchage du support. Dans le cas d'un support 100% cire, une alternative peut être envisagée pour échauffer le renfort imprégné sans échauffer la cire: soumettre la surface cylindrique de la pièce en cours à un champ magnétique variable. Les courants induits dans le tissu de carbone (conducteur) vont échauffer ce dernier par effet Joule. On crée ainsi une distribution de source volumique de chaleur là où elle est nécessaire uniquement. La cire, qui est un isolant électrique, ne subira aucun échauffement.

Si nécessaire, une post-polymérisation de la pièce finie est toujours possible bien que la polymérisation en cours de fabrication devrait suffire.

La dernière étape ou étape e) concerne le dépôt du support. Deux cas sont envisagés. Soit le support est constitué du matériau support uniquement, par exemple de la cire ou du plâtre ; dans ce cas, on ne fait pas usage des bandes 'chute'. Soit le support 21 est constitué du renfort c'est-à-dire du tissu (ou tresse plate) issu des bandes 'chute' plus du matériau support. Dans le premier cas, il existe des techniques de dépôts par tête d'injection décrites dans le procédé PRF (non représenté à la figure 4). Dans le second cas, le renfort imprégné de cire chaude ou de plâtre humide 21 s'enroule de part et d'autre du matériau composite 20 de façon à combler les vides. Une seconde racle 23 permet d'assurer l'égalité des épaisseurs du matériau composite 20 et du support 21 (voir figure 6). Ensuite, la cire se durcit en refroidissant ou le plâtre se durcit en séchant.

En variante, le procédé PRT tel que décrit ci-dessus peut comporter une étape supplémentaire de couture (ou stitching) des bandes de renfort entre elles dans une direction perpendiculaire au plan du tissu ; cela permet d'éviter un éventuel glissement des bandes de tissu et, en conséquence, cela permet d'assurer une meilleure résistance en interlaminaire du composite. L'étape de couture s'effectue après l'étape d) sur le renfort imprégné partiellement polymérisé; le tissu ou la tresse devant être suffisamment tendre pour permettre l'insertion de l'aiguille au travers.

Dans cette variante, un cycle de post-polymérisation sera ensuite effectué une fois la pièce finie.

### Comparaison des procédés PRF et PRT

Notons que le procédé renfort tissu (PRT) présente plusieurs avantages comparé au procédé renfort fil (PRF) :
- la cadence de fabrication du procédé renfort tissu (ou tresse) est supérieure. En effet, pour la réalisation d'une couche de largeur *l* avec un fil de diamètre *D*, *l*/*D* tours de mandrin sont nécessaires, contre un seul pour la méthode PRT. A titre d'exemple, pour une pièce fabriquée avec le procédé PRT par superposition de 40 plis de renfort, à raison de 1 tour de mandrin par minute, le temps de fabrication d'une pièce est inférieur à une heure;
- l'enroulement à ∼90° en pose PRF va induire une faiblesse de la résistance en traction de la pièce dans le sens axial. La méthode PRT permet de solutionner ce problème grâce au tissu 0/90° ou à la tresse 0/+-60°;
- la complexité du procédé de fabrication PRF augmente avec la complexité de la pièce (cfr dépôt de la quatrième couche décrite à la figure 3F). Le procédé PRT ne pose pas ce problème grâce à la découpe automatisée du tissu;
- le rouleau de calibration utilisé dans le procédé PRT permet d'une part de s'assurer de l'épaisseur de la couche déposée et également d'obtenir un taux de fibre Vf élevé;
- la post-polymérisation peut être évitée éventuellement dans le cas PRT alors qu'elle sera probablement toujours nécessaire pour le procédé PRF. En effet la zone située sous le fil déposé, étant plongée dans l'ombre, reçoit une densité d'UV insuffisante conduisant à une polymérisation partielle. Pour atteindre un degré de polymérisation élevé, il est alors nécessaire de faire subir à la pièce une post-cuisson. Le PRT, en évitant peut-être cette étape supplémentaire, devrait offrir des temps de fabrication et des coûts moindres.

### Avantages du procédé renfort fil et tissu (ou tresse)

En conclusion, on peut rappeler les deux principaux avantages du procédé selon l'invention que ce soit avec un renfort tissu (ou tresse) ou fil.

D'une part, ce procédé permet de réaliser des pièces de révolution à section droite complexe (y compris des zones en surplomb), en composite, ce qui va permettre d'alléger significativement les structures.

D'autre part, ce procédé permet d'automatiser la fabrication de telles pièces, offrant ainsi une bonne répétabilité ainsi qu'une réduction des coûts de main d'oeuvre. Ce procédé permet également une grande flexibilité au niveau des pièces obtenues par opposition aux documents EP 1 938 955 A1 et US 5,176,864 A. Une infinité de pièces est ainsi réalisable sur la même machine avec pour seule condition un diamètre minimum de pièce supérieur ou égal au diamètre du mandrin.

## Revendications

1. Procédé automatique de fabrication couche par couche d'une pièce composite de révolution et de section droite complexe, **caractérisé en ce qu'**il comprend les étapes suivantes pour la fabrication de chacune des couches:
a) On déroule de manière continue une bobine ou un rouleau comportant un renfort (1,11);
b) Ledit renfort (1,11) est préimprégné d'une résine ou on imprègne le renfort d'une résine liquide par passage dans un bain (2);
c) On enroule le renfort imprégné ou préimprégné (22) sur un mandrin (4) cylindrique en rotation;
d) On polymérise complètement ou partiellement le renfort imprégné ou préimprégné (22) pour l'obtention d'un matériau composite (20);
e) On dépose un support (21) de part et d'autre du matériau composite (20) constituant la pièce en cours de fabrication de manière à combler des vides entourant ladite pièce et ainsi maintenir la pièce en cours de fabrication;
ledit procédé étant en outre **caractérisé en ce que**, après la réalisation de la pièce composite couche par couche, le support (9,21) est séparé de ladite pièce et ladite pièce est extraite de son mandrin (4).

2. Procédé automatique de fabrication selon la revendication 1, **caractérisé en ce que** le renfort (11) est un tissu ou une tresse.

3. Procédé automatique de fabrication selon la revendication 2, comprenant en outre une étape a') de découpe automatique du renfort (11) en bandes dites 'renfort' (15) et en bandes dites 'chutes' (16) de largeur variable selon la géométrie de la pièce à réaliser, après l'étape a).

4. Procédé automatique de fabrication selon la revendication 3, **caractérisé en ce que**, parallèlement à l'étape b) mise en oeuvre, les bandes 'chutes' (16) sont imprégnées par le matériau support (9), formant ainsi le support (21) qui sera utilisé dans l'étape e).

5. Procédé automatique de fabrication selon la revendication 1, **caractérisé en ce que** le support est constitué du matériau support (9) uniquement.

6. Procédé automatique de fabrication selon la revendication 5, **caractérisé en ce que** le dépôt de matériau support (9) s'effectue par pulvérisation de fines gouttelettes au moyen d'une tête d'injection (6), ledit matériau support (9) étant sous forme liquide avec une viscosité appropriée pour l'injection.

7. Procédé automatique de fabrication selon la revendication 1, **caractérisé en ce que**, dans l'étape d), la réticulation de la résine est amorcée par un rayonnement UV ou IR (5).

8. Procédé automatique de fabrication selon la revendication 1, **caractérisé en ce que**, dans l'étape d), le renfort imprégné (22) est échauffé par effet Joule au moyen d'un champ magnétique variable appliqué à la pièce en cours de réalisation.

9. Procédé automatique de fabrication selon la revendication 2, comportant en outre une étape de couture (stitching) des renforts imprégnés partiellement polymérisés à l'étape d), ladite couture s'effectuant dans une direction perpendiculaire aux couches de renfort enroulées.

10. Procédé automatique de fabrication selon l'une quelconque des revendications précédentes, **caractérisé en ce que** la pièce finie subit un cycle de post-polymérisation.

11. Procédé automatique de fabrication selon l'une quelconque des revendications précédentes, **caractérisé en ce que** la résine est une résine thermodurcissable, celle-ci étant catalysée à l'aide d'un photoamorceur ou d'un thermoamorceur.

12. Procédé automatique de fabrication selon la revendication 5, **caractérisé en ce que** le matériau support (9) est un matériau à bas point de fusion, un matériau soluble dans un solvant, un matériau friable après solidification ou un matériau pulvérulent à certaines températures.

13. Procédé automatique de fabrication selon la revendication 12, **caractérisé en ce que** le matériau support (9) est sélectionné parmi le groupe constitué de la cire, du plâtre, d'Aquacore^{™}, de l'étain pur, d'un matériau à base d'amidon, du sel et du sable.

## Patentansprüche

1. Automatisches Verfahren zur schichtweisen Herstellung eines Rotations-Verbundteils mit komplexem Profilschnitt, **dadurch gekennzeichnet, dass** es die folgenden Schritte für die Herstellung jeder der Schichten umfasst:
a) kontinuierliches Abrollen einer Spule oder einer Rolle, die eine Verstärkung aufweist (1, 11),
b) Vorimprägnieren der Verstärkung (1, 11) mit einem Harz oder Imprägnieren der Verstärkung mit einem flüssigen Harz durch Durchlaufen eines Bads (2),
c) Aufrollen der imprägnierten oder vorimprägnierten Verstärkung (22) auf eine rotierende zylindrische Hülse (4),
d) vollständiges oder teilweises Polymerisieren der imprägnierten oder vorimprägnierten Verstärkung (22) zwecks Erhalt eines Verbundmaterials (20),
e) Aufbringen einer Basis (21) auf der einen und der anderen Seite des Verbundmaterials (20), das das in Herstellung begriffene Teil bildet, um die Hohlräume auszufüllen, die das Teil umgeben und somit das in Herstellung begriffene Teil zu halten,
wobei das Verfahren **dadurch gekennzeichnet ist, dass** die Basis (9, 21) nach der schichtweisen Herstellung des Verbundteils von dem Teil getrennt wird und das Teil von seiner Hülse (4) abgezogen wird.

2. Automatisches Herstellungsverfahren nach Anspruch 1, **dadurch gekennzeichnet, dass** die Verstärkung (11) ein Gewebe oder ein Geflecht ist.

3. Automatisches Herstellungsverfahren nach Anspruch 2, das ferner nach dem Schritt a) einen Schritt a') des automatischen Schneidens der Verstärkung (11) in 'Verstärkungsbänder' (15) und in 'Verschnittbänder' (16) variabler Breite gemäß der Geometrie des herzustellenden Teils umfasst.

4. Automatisches Herstellungsverfahren nach Anspruch 3, **dadurch gekennzeichnet, dass** parallel zur Umsetzung von Schritt b) die 'Verschnittbänder' (16) vom Basismaterial (9) imprägniert werden, wodurch die Basis (21) entsteht, die in Schritt e) verwendet wird.

5. Automatisches Herstellungsverfahren nach Anspruch 1, **dadurch gekennzeichnet, dass** die Basis nur vom Basismaterial (9) gebildet wird.

6. Automatisches Herstellungsverfahren nach Anspruch 5, **dadurch gekennzeichnet, dass** das Aufbringen von Basismaterial (9) durch Zerstäuben von kleinen Tröpfchen mit einem Spritzkopf (6) erfolgt, wobei das Basismaterial (9) in flüssiger Form mit einer für das Spritzen geeigneten Viskosität vorliegt.

7. Automatisches Herstellungsverfahren nach Anspruch 1, **dadurch gekennzeichnet, dass** in Schritt d) die Vernetzung des Harzes durch eine UV- oder IR-Bestrahlung (5) gestartet wird.

8. Automatisches Herstellungsverfahren nach Anspruch 1, **dadurch gekennzeichnet, dass** in Schritt d) die imprägnierte Verstärkung (22) mit einem variablen Magnetfeld, das auf das in Herstellung begriffenen Teil angewendet wird, durch Joule-Effekt erwärmt wird.

9. Automatisches Herstellungsverfahren nach Anspruch 2, das ferner einen Nähschritt (stitching) der imprägnierten, in Schritt d) teilweisen polymerisierten Verstärkungen aufweist, wobei das Nähen lotrecht zu den aufgerollten Verstärkungsschichten erfolgt.

10. Automatisches Herstellungsverfahren nach einem der vorangehenden Ansprüche, **dadurch gekennzeichnet, dass** das fertige Teil einem Post-Polymerisationszyklus unterzogen wird.

11. Automatisches Herstellungsverfahren nach einem der vorangehenden Ansprüche, **dadurch gekennzeichnet, dass** das Harz ein duroplastisches Harz ist, das mit Hilfe eines Photoinitiators oder eines Thermoinitiators katalysiert ist.

12. Automatisches Herstellungsverfahren nach Anspruch 5, **dadurch gekennzeichnet, dass** das Basismaterial (9) ein Material mit niedrigem Schmelzpunkt, ein in einem Lösungsmittel lösliches Material, ein nach Verfestigung zerreibbares Material oder ein bei bestimmten Temperaturen pulverförmiges Material ist.

13. Automatisches Herstellungsverfahren nach Anspruch 12, **dadurch gekennzeichnet, dass** das Basismaterial (9) aus der Gruppe ausgewählt ist, die von dem Wachs, dem Gips, Aquacore™, dem reinen Zinn, einem Material auf der Basis von Stärke, dem Salz und dem Sand gebildet wird.

## Claims

1. An automated method for manufacturing, layer by layer, a composite part with rotational symmetry and a complex cross-section, **characterized in that** it comprises the following steps for the manufacturing of each layer:
a) a reel or roll with a reinforcement (1,11) is continuously unwound;
b) said reinforcement (1,11) is pre-impregnated with a resin or the reinforcement is impregnated with a liquid resin by passing through a bath (2);
c) the impregnated or pre-impregnated reinforcement (22) is wound onto a rotating cylindrical mandrel (4);
d) the impregnated or pre-impregnated reinforcement (22) is completely or partially polymerized so as to obtain a composite material (20);
e) a support (21) is deposited on either side of the composite material (20) making up the part being manufactured so as to fill in the empty spaces surrounding said part and thus to maintain the part being manufactured;
said method being further **characterized in that**, after the composite part was manufactured layer by layer, the support (9,21) is separated from said part and said part is removed from its mandrel (4).

2. The automated manufacturing method according to Claim 1, **characterized in that** the reinforcement (11) is a fabric or a braid.

3. The automated manufacturing method according to Claim 2, further comprising a step a') for automatically cutting the reinforcement (11) into strips called "reinforcement strips" (15) and into strips called "offcut strips" (16) of a width that varies according to the geometry of the part to be produced, after step a).

4. The automated manufacturing method according to Claim 3, **characterized in that**, in parallel with the implemented step b), the offcut strips (16) are impregnated by the support material (9), thereby forming the support (21) that will be used in step e).

5. The automated manufacturing method according to Claim 1, **characterized in that** the support is made up of the support material (9) only.

6. The automated manufacturing method according to Claim 5, **characterized in that** the deposition of the support material (9) is carried out by atomisation of fine droplets by means of a spray head (6), said support material (9) being in liquid form with a viscosity that is suitable for spraying.

7. The automated manufacturing method according to Claim 1, **characterized in that**, in step d), a UV or IR radiation (5) initiates the cross-linking of the resin.

8. The automated manufacturing method according to Claim 1, **characterized in that**, in step d), the impregnated reinforcement (22) is heated by a Joule effect by means of a variable magnetic field applied to the part being produced.

9. The automated manufacturing method according to Claim 2, further comprising a step for stitching the impregnated reinforcements partially polymerised in step d), said stitching occurring in a direction that is perpendicular to the wound reinforcement layers.

10. The automated manufacturing method according to any one of the preceding claims, **characterized in that** the finished part undergoes a post-polymerization cycle.

11. The automated manufacturing method according to any one of the preceding claims, **characterized in that** the resin is a thermosetting resin being catalysed by means of a photo-initiator or a thermo-initiator.

12. The automated manufacturing method according to Claim 5, **characterized in that** the support material (9) is a material with a low melting point, a material soluble in a solvent, a material that is brittle after solidification, or a material that is powdery at specific temperatures.

13. The automated manufacturing method according to Claim 12, **characterized in that** the support material (9) is selected from the group consisting of wax, plaster, Aquacore™, pure tin, a material based on starch, salt and sand.
